# EUROPEAN PATENT APPLICATION

(11) **EP 0 822 137 A2**
(43) Date of publication of application: **04.02.1998**
(21) Application number: 97305680.7
(22) Date of filing: 29.07.1997
(51) Int. Cl.: B64C 11/06

(54) **Propeller blade root bearing assembly**

(30) Priority: 01.08.1996 GB 9616170
(71) Applicant: THE TIMKEN COMPANY, Canton, Ohio 44706-2798 (US)
(72) Inventor: Wright, Alan John, Northampton NN3 1JG (GB); Williams, David John, Duston NN5 6PY (GB)
(74) Representative: Marles, Alan David

(57) **Abstract**

There is provided a bearing assembly for mounting a propeller blade root 105 in a housing 110, the bearing assembly comprising an inner race assembly 131 for fixed attachment to a propeller blade root 105, an outer race assembly 135 for engagement with a housing 110, a plurality of rolling elements 115 therebetween and a locking device 138 for securing said outer race assembly 135 to the housing 110. The outer race assembly 135 has, on its radially outer surface, race holding means 150 for engagement with respective housing holding means 160 on the radially inner surface of the housing 110, whereby the race holding means 150, 160 are arranged so as to permit the relative axial rotation of the outer race assembly 135 with respect to the housing 110 from a first non-engaging position, such that, the outer racing assembly 135 is capable of axial movement relative to the housing 110 to a second engaging position where the outer race assembly 135 is prevented from axial movement relative to the housing 110.

## Description

The present invention relates to a bearing assembly and in particular to a propeller blade root bearing assembly.

With propeller arrangements in which a plurality of blades are spaced equidistantly about the circumference of a hub, each blade is mounted in the hub in a manner which enables rotation of the blade about its longitudinal axis. This enables the pitch of each blade to be altered during flight, as desired. The bearing which enables this longitudinal rotation of a propeller blade is commonly termed a propeller blade root bearing assembly. One important feature of the propeller blade root assembly is that in the event of its failing, the bearing assembly should continue to hold the propeller blade. This ensures the propeller blade is prevented from becoming detached from the hub and being flung outwards by the action of the hub rotation when the bearing assembly fails.

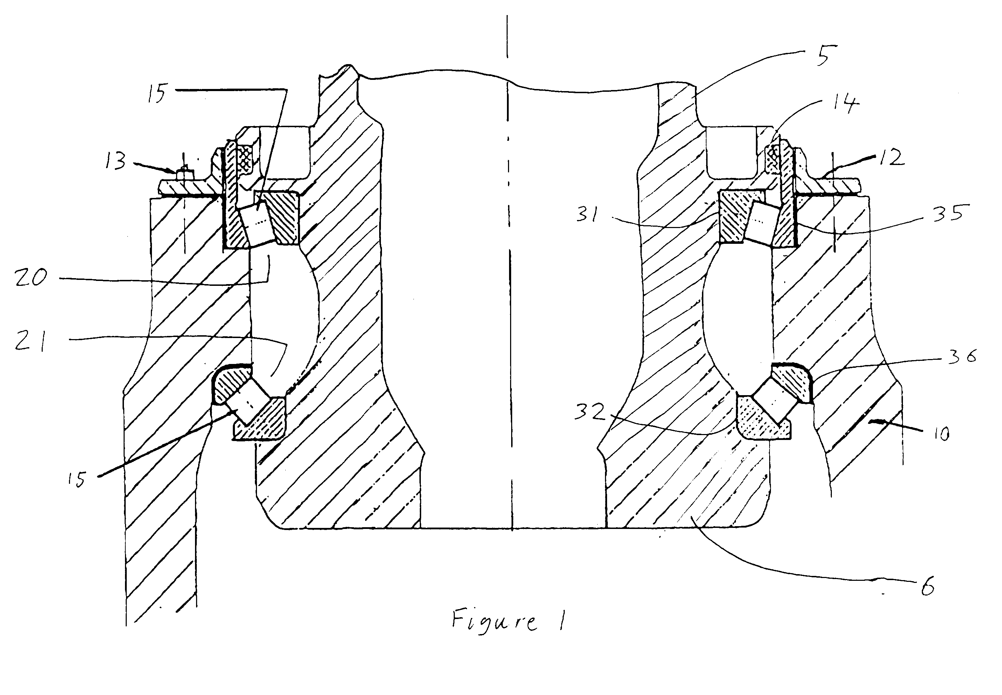

A schematic diagram of a conventional propeller blade root assembly is shown in Figure 1. Only one propeller blade root 5 is shown surrounded by a split housing 10. In practice a plurality of propeller blades are arranged equidistantly about the propeller hub with each propeller blade extending from its base 6 axially outwardly from the housing 10. The bearing assembly consists of two rows 20, 21 of tapered roller bearings 15 facing inwardly. The axially inner row of roller bearings 21 is steeply angled so as to have a high thrust rating enabling it to absorb the large, axially outwardly directed centrifugal force generated when the hub is rotating quickly. The axially outer row of roller bearings 20 on the other hand is arranged at a shallow angle, in comparison with the inner row 21, as the inwardly directed thrust absorbed by the outer row 20 is not generally as great as the thrust absorbed by the inner row 21. Each of the rows 20, 21 of roller bearings is mounted between inner races 31, 32 and outer races 35, 36 which are assembled onto the propeller blade root 5 prior to the housing being fitted. A radial seal 14 is also provided to prevent dirt, etc. from working into the bearing assembly.

Once the housing 10 has been assembled around the blade root 5, the bearing assembly is preloaded. This ensures that the propeller blade is held securely in place and that the roller bearings do not work themselves out of their correct alignment. With the bearing assembly shown in Figure 1, preloading is performed by the tightening of a preload nut 12. The preload nut 12 passes through a flange connected to the outer race 35 of the outer row 20 into the housing 10. Hence, by tightening the preload nut 12, the outer race 35 is forced axially outwardly which results in the preloading of both the inner and outer rows of roller bearings 20, 21. The preload nut 12 is rotated until there is no axial play between the rows 20, 21 and is then further advanced a predetermined number of degrees in accordance with the desired preload. In view of the forces involved, to achieve the desired preload a very large torque on the nut 12 is required. Once the necessary preload has been established the nut 12 is then locked using any suitable device 13.

So as to ensure that the propeller blade does not become detached from the hub in the event of the bearing assembly failing, the base 6 of the propeller blade root 5 is dimensioned so that its outer diameter is greater than the minimum inner diameter of the housing 10. This means that during maintenance, for example, in order to examine any particular propeller blade and its associated bearing assembly, the housing 10 must disassembled to permit access. This in turn means that the locking devices 13 must be released and the preload nuts 12 loosened for all of the propeller blades before the housing 10 can be removed. This results in the aeroplane being taken out of service for even simple maintenance procedures.

In addition, when re-assembling the housing 10, the preloading of each of the nuts must be performed manually. Not only does this require great strength but also there is a risk that the preload may be inaccurate as it is dependent upon the judgement of the engineer and assumes that the preload conditions for any particular bearing assembly are identical for all bearing assemblies.

The present invention seeks to provide a bearing assembly which addresses at least one of the problems described above with respect to known propeller blade root bearing assemblies and in particular seeks to provide a bearing assembly which enables more exact preloading to be performed and separately does not require the entire housing to be dismantled for maintenance of any particular propeller blade.

The present invention provides a bearing assembly for mounting a propeller blade root in a housing, the bearing assembly comprising an inner race assembly for fixed attachment to a propeller blade root, an outer race assembly for engagement with a housing, a plurality of rolling elements therebetween and a locking device for securing said outer race assembly to the housing, the outer race assembly having on its radially outer surface race holding means for engagement with respective housing holding means on the radially inner surface of the housing, the race holding means being arranged to permit relative axial rotation of the outer race assembly with respect to the housing from a first non-engaging position where the outer race assembly is capable of axial movement relative to the housing to a second engaging position where the outer race assembly is prevented from axial movement relative to the housing.

In a preferred embodiment the race holding means and the housing holding means are in the form of a bayonet fixture.

Ideally, the race holding means are in the form of one or more radially outwardly projecting lugs for engagement with radially inwardly extending abutment surfaces on the housing. Moreover, the housing holding means may be in the form of a plurality of axially extending, radially inwardly projecting ridges which terminate in said abutment surfaces, the ridges defining axially extending slots along which the lugs on the outer race assembly may pass.

In an alternative aspect the present invention provides a bearing assembly for mounting a propeller blade root in a housing, the bearing assembly comprising an inner race assembly for fixed attachment to a propeller blade root, an outer race assembly for engagement with a housing, a plurality of rolling elements therebetween, a locking device for securing said outer race assembly to the housing and a preloading member, the inner and outer race assemblies defining therebetween a cavity having an inlet for the introduction of pressurised fluid, whereby the bearing assembly is preloaded by the introduction of pressurised fluid into the cavity and the preloading member is arranged to maintain the preload after the pressurised fluid has been removed.

Preferably, seals are provided adjacent the cavity to seal the cavity from the interior of the bearing assembly. Furthermore, the outer race assembly may have a screw-threaded surface for engagement with the locking device.

An embodiment of the present invention will now be described by way of example, with reference to the accompanying drawings, in which:
Figure 1 is a schematic cross-sectional view of a known propeller blade root bearing assembly;
Figure 2 is a schematic cross-sectional view of a propeller blade root bearing assembly in accordance with the present invention; and
Figure 3 is a partial, schematic end view of the propeller blade root bearing assembly of Figure 2.

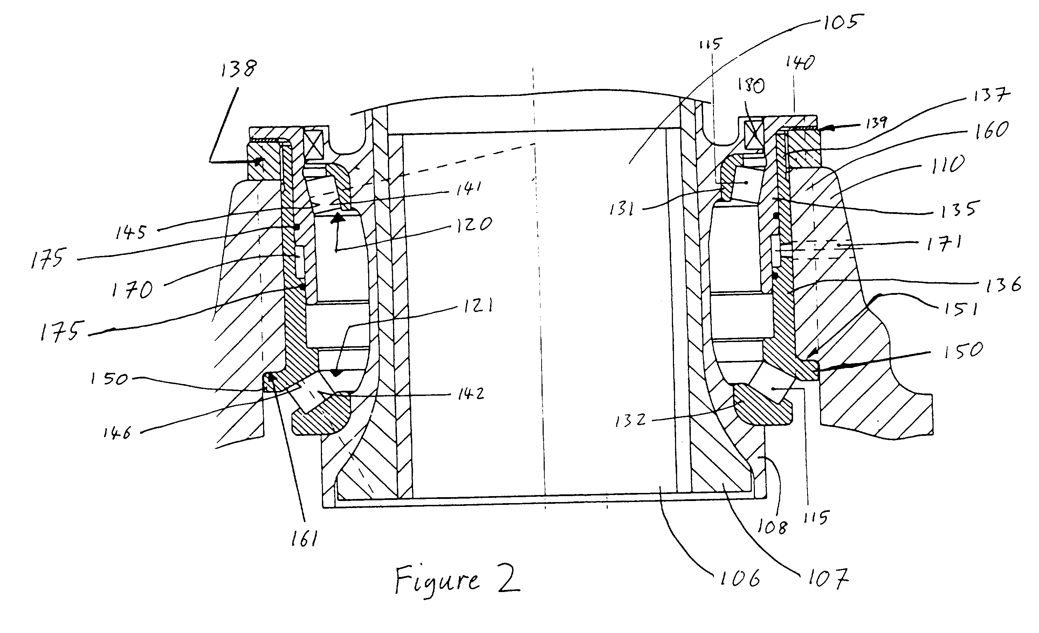

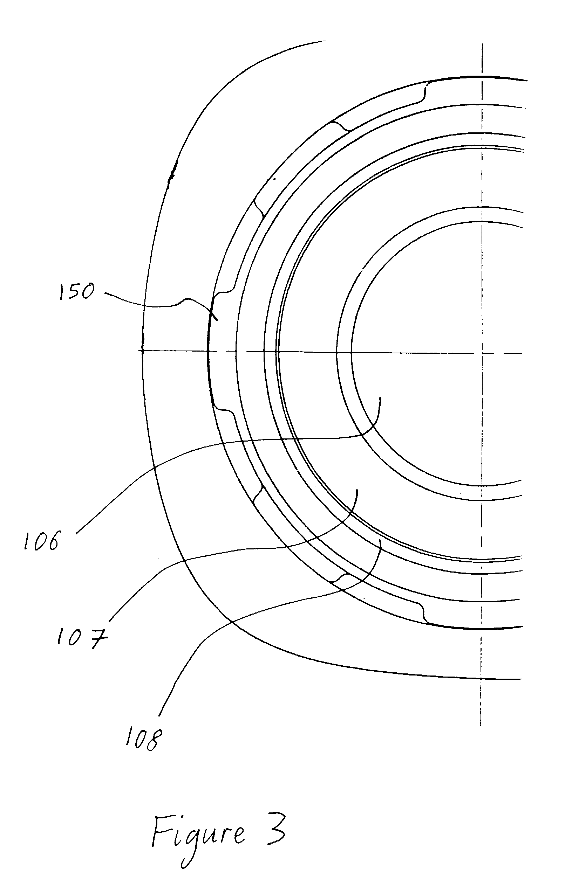

Referring to Figures 2 and 3, there is shown a fitted bearing assembly for securing a propeller blade root 105 having a flared base 106. The blade root shown is that of a composite propeller blade having a carbon fibre inner portion 107 and a steel outer lining 108. The flared arrangement of the two materials at the base 106 provides good stress bearing characteristics. The blade root 105 is securely fitted within a housing 110 forming part of a hub. Unlike Figure 1, it may be seen in Figure 2 that the maximum outer diameter of the flared base 106 of the propeller blade root is less than the minimum inner diameter of the housing 110.

The bearing assembly comprises an axially outer row 120 of roller bearings and an axially inner row of roller bearings 121. The outer row 120 consists of an inner raceway 131 having a roller surface 141 and an outer raceway 135 having a roller surface 145 facing the roller surface 141. The inner row 121 consists of an inner raceway 132 having a roller surface 142 and an outer raceway 136 having a roller surface 146 facing the roller surface 142. A plurality of tapered roller bearings 115 are located between each pair of opposed inner and outer raceways.

The axially inner bearing row 121 is steeply angled so as to provide a high thrust rating and so be capable of absorbing the large axially outwardly directed thrust created when the hub rotates at high speed. The axially outer bearing row 120 is less steeply angled as it is not required to withstand the thrusts experienced by the axially inner bearing row.

The outer raceway 136 of the inner bearing row is provided at its axially inner end with a plurality of lugs 150. The lugs 150 are equally spaced around the circumference of the raceway 136 and each has a projection engaging, axially outwardly facing surface 151. Corresponding projections or ridges 160 are provided with respective lug engaging, axially inwardly facing surfaces 161. The projections 160 are evenly spaced around the axially inner circumference of the housing 110 with the angular spacing between the projections 160 being arranged to permit the lugs 150 to pass between the projections 160. Thus, the projections 160 define slots along which the lugs 150 may travel. The lugs 150 and the projections 160 are capable of relative rotation so that, after passing between the projections 160, the lugs 150 may be rotated so as to be aligned with the lug-engaging surfaces 151. In this way the lugs 150 and projections function similarly to that of a bayonet fixture.

The outer raceway 136 of the inner bearing row extends axially outwardly past the outer raceway 135 of the outer bearing row so as to overlap therewith, with the raceway 135 being located radially within the raceway 136. A portion 137 of the outer raceway 136 extends beyond the housing 110 and has a screw-threaded radially outer surface which engages with a locking nut 138. The locking nut 138 abuts the housing 110 so that as the locking nut 138 is tightened by rotation on the screw-threaded surface of the portion 137, the lugs 150 are brought into engagement with the projections 160 on the housing 110.

The outer raceway 135 of the outer bearing row also extends axially outwardly beyond both the portion 137 of the outer raceway 136 and the locking nut 138. The outer raceway 135 terminates at its axially outer end in a radially outwardly extending circumferential flange 140 which overlaps the axially outer end of the locking nut 138. The radially inner surface of the raceway 135 axially outwardly of the bearing row 120 has a seal 180 provided between the raceway 135 and the propeller blade root 105 to prevent the ingress of dirt and other foreign particles into the bearing assembly.

The two outer raceways 135, 136 overlap between the bearing rows 120, 121 and are shaped so as to define a cavity 170. The cavity 170 is sealed by the provision of sealing rings 175, for example o-rings, either side of the cavity 170 between the two outer raceways. An inlet 171 to the cavity 170 is provided through the housing 110 and the outer raceway 136 to permit pressurised oil or other suitable fluid to be introduced into the cavity. As the outer raceways 135, 136 are capable of relative axial movement, introduction of a pressurised fluid into the cavity 170 results in the raceways being pushed axially away from one another thereby preloading the bearing assembly.

The preload applied to the bearing assembly is directly related to the pressure of the fluid within the cavity 170. As the pressure of the fluid can be easily and accurately measured precise preloading of the bearing assembly can be achieved.

During preloading of the bearing assembly a gap forms between the axially outer face of the locking nut 138 and the axially inner face of the circumferential flange 140. This space is then filled by an appropriately sized spacer or split shim 139. This then enables the pressure within the cavity 170 to be reduced to atmospheric pressure whilst still maintaining the desired preload. In this way exact preloading of the bearing assembly, specific to an individual bearing assembly, is achieved without the need for great strength from the engineer and without reliance on human judgement.

Since the outer raceway 136 and the housing 110 have respective interengaging lugs and projections, in the event of failure of the bearing assembly the propeller blade root is prevented from being thrown from the housing by the rotation of the hub. However, because the projections are circumferentially spaced apart to permit the lugs to pass between the projections, an individual propeller blade and its bearing assembly may be dismantled without the entire housing being removed. Indeed, it is a relatively simple operation to remove a single propeller blade which involves removal of the preload on the bearing assembly and then rotation of the propeller blade root and the bearing assembly relative to the housing so that the lugs become aligned with the spaces between the projections on the housing at which point the propeller blade root and the bearing assembly may be removed from the housing.

## Claims

1. A bearing assembly for mounting a propeller blade root in a housing, the bearing assembly comprising an inner race assembly for fixed attachment to a propeller blade root, an outer race assembly for engagement with a housing, a plurality of rolling elements therebetween and a locking device for securing said outer race assembly to the housing, the outer race assembly having on its radially outer surface race holding means for engagement with respective housing holding means on the radially inner surface of the housing, the race holding means being arranged to permit relative axial rotation of the outer race assembly with respect to the housing from a first non-engaging position where the outer race assembly is capable of axial movement relative to the housing to a second engaging position where the outer race assembly is prevented from axial movement relative to the housing.

2. A bearing assembly as claimed in claim 1, wherein the race holding means and the housing holding means are in the form of a bayonet fixture.

3. A bearing assembly as claimed in claim 2, wherein the race holding means are in the form of one or more radially outwardly projecting lugs for engagement with radially inwardly extending abutment surfaces on the housing.

4. A bearing assembly as claimed in claim 3, wherein the housing holding means are in the form of a plurality of axially extending, radially inwardly projecting ridges which terminate in said abutment surfaces, the ridges defining axially extending slots along which the lugs on the outer race assembly may pass.

5. A bearing assembly for mounting a propeller blade root in a housing, the bearing assembly comprising an inner race assembly for fixed attachment to a propeller blade root, an outer race assembly for engagement with a housing, a plurality of rolling elements therebetween, a locking device for securing said outer race assembly to the housing and a preloading member, the inner and outer race assemblies defining therebetween a cavity having an inlet for the introduction of pressurised fluid, whereby the bearing assembly is preloaded by the introduction of pressurised fluid into the cavity and the preloading member is arranged to maintain the preload after the pressurised fluids has been removed.

6. A bearing assembly as claimed in claim 5, wherein seals are provided adjacent the cavity to seal the cavity from the interior of the bearing assembly.

7. A bearing assembly as claimed in claim 5 or 6, wherein the outer race assembly has a screw-threaded surface for engagement with the locking device.

8. A bearing assembly as claimed in any one of claims 5 to 7 wherein the outer race assembly has on its radially outer surface race holding means for engagement with respective housing holding means on the radially inner surface of the housing, the race holding means being arranged to permit relative axial rotation of the outer race assembly with respect to the housing from a first non-engaging position where the outer race assembly is capable of axial movement relative to the housing to a second engaging position where the outer race assembly is prevented from axial movement relative to the housing.

9. A bearing assembly as claimed in claim 8 wherein the race holding means and the housing holding means are in the form of a bayonet fixture.

10. A bearing assembly as claimed in claim 9 wherein the race holding means are in the form of one or more radially outwardly projecting lugs for engagement with radially inwardly extending abutment surfaces on the housing.

11. A bearing assembly as claimed in claim 10 wherein the housing holding means are in the form of a plurality of axially extending, radially inwardly projecting ridges which terminate in said abutment surfaces, the ridges defining axially extending slots along which the lugs on the outer race assembly may pass.
